# EUROPEAN PATENT APPLICATION

(11) **EP 4 589 986 A1**
(43) Date of publication of application: **23.07.2025**
(21) Application number: 23875111.9
(22) Date of filing: 18.09.2023
(51) Int. Cl.: H04R 1/28, H04R 5/04, H04R 3/04, H04R 3/02, H04R 7/00

(54) **ELECTRONIC DEVICE AND METHOD FOR GENERATING VIBRATION SOUND SIGNAL**

(30) Priority: 07.10.2022 KR 20220129113; 11.11.2022 KR 20220151019
(71) Applicant: Samsung Electronics Co., Ltd., Suwon-si, Gyeonggi-do 16677 (KR)
(72) Inventor: PARK, Youngbae, Suwon-si Gyeonggi-do 16677 (KR); YOON, Gunhyuk, Suwon-si Gyeonggi-do 16677 (KR); KIM, Seungnam, Suwon-si Gyeonggi-do 16677 (KR); PARK, Choonghyo, Suwon-si Gyeonggi-do 16677 (KR); BAE, Sumin, Suwon-si Gyeonggi-do 16677 (KR); SON, Beakkwon, Suwon-si Gyeonggi-do 16677 (KR); CHO, Woojin, Suwon-si Gyeonggi-do 16677 (KR)
(74) Representative: Nederlandsch Octrooibureau
(86) International application number: PCT/KR2023/014053
(87) International publication number: WO 2024/076043

(57) **Abstract**

This electronic device may comprise at least one processor, a microphone, a speaker, and a motor. The at least one processor may identify a control signal for operating the motor. The at least one processor may identify the strength of a sound input through the microphone on the basis of the identification of the control signal. The at least one processor may, if the strength of the sound input through the microphone is equal to or greater than a threshold, generate a first vibration sound signal on the basis of a first frequency signal corresponding to a first sound pressure and a second frequency signal corresponding to a second sound pressure. The at least one processor may, if the strength of the sound is smaller than the threshold, generate a second vibration sound signal on the basis of a first frequency signal corresponding to a third sound pressure and a second frequency signal corresponding to a fourth sound pressure.

## Description

### [Technical Field]

Various embodiments relate to an electronic device and a method for generating a vibration sound signal.

### [Background Art]

An electronic device that provides a vibration function using a motor may generate a vibration sound signal to transmit vibration of the motor through an auditory sense. The vibration of the motor may be transmitted to a user through a tactile sense, and the vibration sound signal may be transmitted to the user through the auditory sense. Even when the electronic device providing the vibration function is not in contact with the user, a notification may be transmitted to the user through a speaker.

The above-described information may be provided as a related art for the purpose of helping to understand the present disclosure. No claim or determination is raised as to whether any of the above-described information may be applied as a prior art related to the present disclosure.

### [Disclosure]

### [Technical Solution]

An electronic device according to an embodiment is provided. The electronic device may comprise at least one processor, a microphone, a speaker, and a motor. The electronic device may comprise the at least one processor. The electronic device may comprise the microphone. The electronic device may comprise the speaker. The electronic device may comprise the motor. The at least one processor may be configured to identify a control signal for operating the motor. The at least one processor may be configured to, based on identifying the control signal, identify an intensity of sound input through the microphone. The at least one processor may be configured to, in a case that the intensity of the sound input through the microphone is greater than or equal to a threshold, generate a first vibration sound signal based on a first frequency signal in accordance with a first sound pressure and a second frequency signal in accordance with a second sound pressure. The at least one processor may be configured to, in a case that the intensity of the sound is lower than the threshold, generate a second vibration sound signal based on a first frequency signal in accordance with a third sound pressure and a second frequency signal in accordance with a fourth sound pressure. The first sound pressure may be smaller than the second sound pressure. The third sound pressure may be larger than the fourth sound pressure. A first frequency of the first frequency signal may be lower than a second frequency of the second frequency signal.

A method performed by an electronic device according to an embodiment is provided. The method performed by the electronic device may comprise identifying a control signal for operating a motor. The method may comprise, based on identifying the control signal, identifying an intensity of sound input through a microphone. The method may comprise, in a case that the intensity of the sound input through the microphone is greater than or equal to a threshold, generating a first vibration sound signal based on a first frequency signal in accordance with a first sound pressure and a second frequency signal in accordance with a second sound pressure. The method may comprise, in a case that the intensity of the sound is lower than the threshold, generating a second vibration sound signal based on a first frequency signal in accordance with a third sound pressure and a second frequency signal in accordance with a fourth sound pressure. The first sound pressure may be smaller than the second sound pressure. The third sound pressure may be larger than the fourth sound pressure. A first frequency of the first frequency signal may be lower than a second frequency of the second frequency signal.

A non-transitory storage medium according to an embodiment may be provided. The non-transitory storage medium may comprise memory for storing instructions. The instructions, when executed by at least one processor, may cause an electronic device 101 or 301 to identify a control signal for operating a motor 303, based on identifying the control signal, identify an intensity of sound input through a microphone 307, in a case that the intensity of the sound input through the microphone 307 is greater than or equal to a threshold, generate a first vibration sound signal based on a first frequency signal in accordance with a first sound pressure and a second frequency signal in accordance with a second sound pressure, in a case that the intensity of the sound is lower than the threshold, generate a second vibration sound signal based on a first frequency signal in accordance with a third sound pressure and a second frequency signal in accordance with a fourth sound pressure. The first sound pressure may be smaller than the second sound pressure. The third sound pressure may be larger than the fourth sound pressure. A first frequency of the first frequency signal may be smaller than a second frequency of the second frequency signal.

### [Description of the Drawings]

FIG. 1 is a block diagram of an electronic device in a network environment, according to embodiments.
FIG. 2 is a block diagram of an audio module, according to embodiments.
FIG. 3 is a block diagram of an electronic device for generating a vibration sound signal, according to embodiments.
FIG. 4 illustrates an example of an environment in which a vibration sound signal is generated, according to embodiments.
FIG. 5 illustrates an equal loudness contour according to a frequency, according to embodiments.
FIG. 6 illustrates an example of a method of generating a vibration sound signal through a filter, according to embodiments.
FIG. 7 illustrates an example of a configuration of a first vibration sound signal and a configuration of a second vibration sound signal, according to embodiments.
FIG. 8 illustrates a flow of an operation of an electronic device for generating a first vibration sound signal or a second vibration sound signal, according to embodiments.
FIG. 9 illustrates a flow of an operation of an electronic device for adjusting an intensity of a vibration sound signal according to whether a telephone application is running, according to embodiments.
FIG. 10 illustrates a flow of an operation of an electronic device for adjusting a vibration sound signal according to the electronic device being identified to be in use through a sensor, according to embodiments.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

A term referring to a vibration sound signal (e.g., the vibration sound signal, a vibration signal, vibration responsive sound), a term referring to an intensity of sound (e.g., the intensity of the sound, a volume of the sound), a term referring to an application (the application, the application, a software application), a term referring to a specified value (a reference value, a threshold value), and the like that used in the following description are exemplified for convenience of explanation. Therefore, the present disclosure is not limited to terms described below, and other terms having equivalent technical meanings may be used. In addition, terms '...unit,' '...device,' '...object,' and '...structure', and the like, used below may mean at least one shape structure or a unit that processes a function.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. hereinafter, 'A' to 'B' refers to at least one of elements from A (including A) to B (including B). Hereinafter, 'C' and/or 'D' refer to including at least one of 'C' or 'D', that is, {'C', 'D', and 'C' and 'D'}.

Prior to describing embodiments of the present disclosure, the terms necessary to describe operations of an electronic device according to embodiments are defined. A vibration sound signal refers to a sound wave generated through a speaker so that a user may auditorily recognize vibration of the electronic device. Vibration sound refers to a sound wave generated by vibration of a motor. Ambient sound refers to sound other than the intended vibration sound signal, that is, a noise signal.

Hereinafter, various embodiments disclosed in the present document will be described with reference to an attached drawing. For convenience of explanation, components illustrated in the drawing may be exaggerated or reduced in their sizes, and the present invention is not necessarily limited thereto as the illustrated.

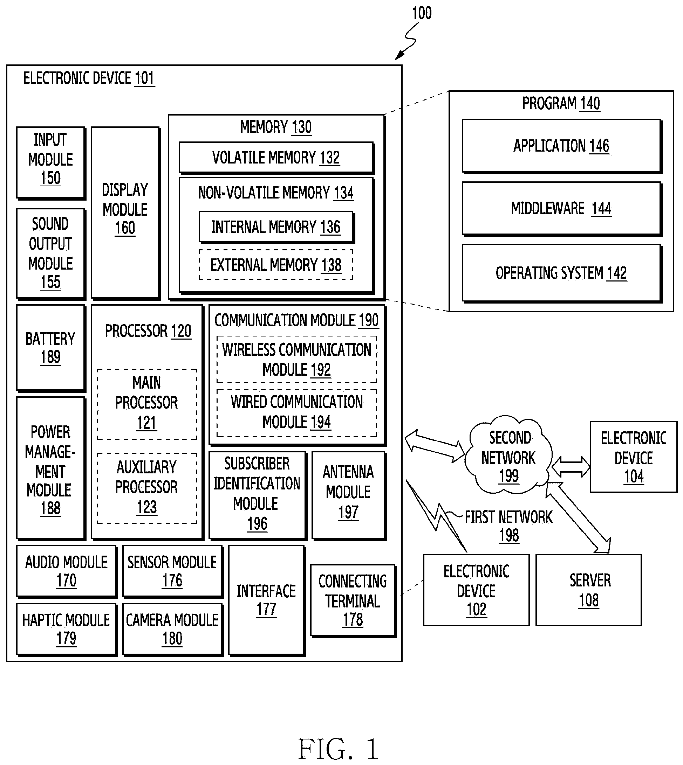

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

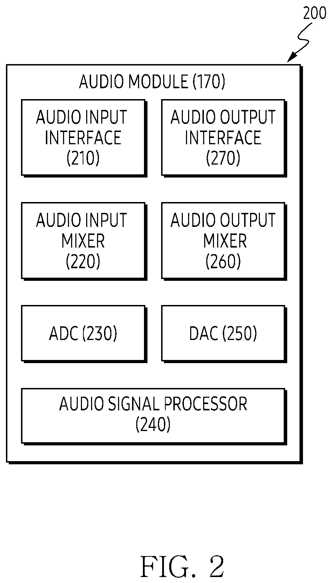

Fig. 2 is a block diagram 200 illustrating the audio module 170 according to various embodiments.

Referring to Fig. 2, the audio module 170 may include, for example, an audio input interface 210, an audio input mixer 220, an analog-to-digital converter (ADC) 230, an audio signal processor 240, a digital-to-analog converter (DAC) 250, an audio output mixer 260, or an audio output interface 270.

The audio input interface 210 may receive an audio signal corresponding to a sound obtained from the outside of the electronic device 101 via a microphone (e.g., a dynamic microphone, a condenser microphone, or a piezo microphone) that is configured as part of the input module 150 or separately from the electronic device 101. For example, if an audio signal is obtained from the external electronic device 102 (e.g., a headset or a microphone), the audio input interface 210 may be connected with the external electronic device 102 directly via the connecting terminal 178, or wirelessly (e.g., BluetoothTM communication) via the wireless communication module 192 to receive the audio signal. According to an embodiment, the audio input interface 210 may receive a control signal (e.g., a volume adjustment signal received via an input button) related to the audio signal obtained from the external electronic device 102. The audio input interface 210 may include a plurality of audio input channels and may receive a different audio signal via a corresponding one of the plurality of audio input channels, respectively. According to an embodiment, additionally or alternatively, the audio input interface 210 may receive an audio signal from another component (e.g., the processor 120 or the memory 130) of the electronic device 101.

The audio input mixer 220 may synthesize a plurality of inputted audio signals into at least one audio signal. For example, according to an embodiment, the audio input mixer 220 may synthesize a plurality of analog audio signals inputted via the audio input interface 210 into at least one analog audio signal.

The ADC 230 may convert an analog audio signal into a digital audio signal. For example, according to an embodiment, the ADC 230 may convert an analog audio signal received via the audio input interface 210 or, additionally or alternatively, an analog audio signal synthesized via the audio input mixer 220 into a digital audio signal.

The audio signal processor 240 may perform various processing on a digital audio signal received via the ADC 230 or a digital audio signal received from another component of the electronic device 101. For example, according to an embodiment, the audio signal processor 240 may perform changing a sampling rate, applying one or more filters, interpolation processing, amplifying or attenuating a whole or partial frequency bandwidth, noise processing (e.g., attenuating noise or echoes), changing channels (e.g., switching between mono and stereo), mixing, or extracting a specified signal for one or more digital audio signals. According to an embodiment, one or more functions of the audio signal processor 240 may be implemented in the form of an equalizer.

The DAC 250 may convert a digital audio signal into an analog audio signal. For example, according to an embodiment, the DAC 250 may convert a digital audio signal processed by the audio signal processor 240 or a digital audio signal obtained from another component (e.g., the processor(120) or the memory(130)) of the electronic device 101 into an analog audio signal.

The audio output mixer 260 may synthesize a plurality of audio signals, which are to be outputted, into at least one audio signal. For example, according to an embodiment, the audio output mixer 260 may synthesize an analog audio signal converted by the DAC 250 and another analog audio signal (e.g., an analog audio signal received via the audio input interface 210) into at least one analog audio signal.

The audio output interface 270 may output an analog audio signal converted by the DAC 250 or, additionally or alternatively, an analog audio signal synthesized by the audio output mixer 260 to the outside of the electronic device 101 via the sound output module 155. The sound output module 155 may include, for example, a speaker, such as a dynamic driver or a balanced armature driver, or a receiver. According to an embodiment, the sound output module 155 may include a plurality of speakers. In such a case, the audio output interface 270 may output audio signals having a plurality of different channels (e.g., stereo channels or 5.1 channels) via at least some of the plurality of speakers. According to an embodiment, the audio output interface 270 may be connected with the external electronic device 102 (e.g., an external speaker or a headset) directly via the connecting terminal 178 or wirelessly via the wireless communication module 192 to output an audio signal.

According to an embodiment, the audio module 170 may generate, without separately including the audio input mixer 220 or the audio output mixer 260, at least one digital audio signal by synthesizing a plurality of digital audio signals using at least one function of the audio signal processor 240.

According to an embodiment, the audio module 170 may include an audio amplifier (not shown) (e.g., a speaker amplifying circuit) that is capable of amplifying an analog audio signal inputted via the audio input interface 210 or an audio signal that is to be outputted via the audio output interface 270. According to an embodiment, the audio amplifier may be configured as a module separate from the audio module 170.

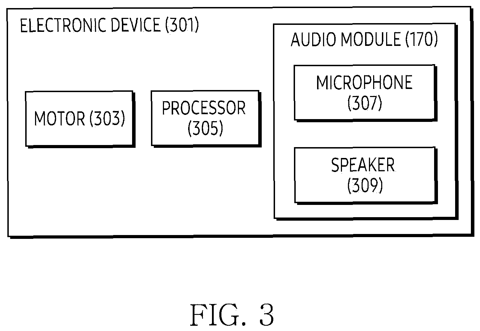

FIG. 3 is a block diagram of an electronic device for generating a vibration sound signal, according to embodiments. The vibration sound signal may mean a sound wave generated through a speaker so that a user may aurally recognize vibration of an electronic device (e.g., the electronic device 101 of FIG. 1). The vibration frequency may be substantially the same as a vibration frequency of a vibration motor.

Referring to FIG. 3, an electronic device 301 may include a motor 303, a processor 305, and an audio module 170. For example, the audio module 170 may include a microphone 307 and a speaker 309. According to an embodiment, the motor 303 may operate to provide the user with a notification through the vibration. For example, the motor 303 may operate to provide the user with a call reception notification through the vibration. For example, the motor 303 may operate to provide the user with a messenger notification through the vibration. For example, the motor 303 may operate to provide the user with an alarm notification through the vibration. For example, the alarm may be a wake-up call. According to an embodiment, the vibration of the motor 303 may be detected by the user with a tactile sense. A vibration sound signal generated by the motor 303 may have a small intensity. Even though the motor 303 operates, the user may not be able to detect the vibration with an auditory sense. Therefore, when the electronic device 301 is not in contact with the user, the user may not be able to detect the vibration of the motor 303.

In order to reduce a case in which the user does not recognize the vibration of the motor 303, the electronic device 301 may output a vibration sound signal. The electronic device 301 may generate the vibration sound signal corresponding to the vibration of the motor 303 in order to provide a notification based on the auditory sense of the user. The electronic device 310 may output the generated vibration sound signal through the speaker 309. According to an embodiment, the vibration sound signal may be generated based on the vibration frequency of the motor 303, so that the user feels the vibration sound signal similar to the vibration of the motor 303. In addition, according to an embodiment, the vibration sound signal may be generated based on an intensity of ambient sound received through the microphone 307. The ambient sound may mean sound other than the intended vibration sound signal, for example, a noise signal.

According to embodiments, the processor 305 may control components of the electronic device 301. The processor 305 may identify a control signal for operating the motor 303. The processor 305 may identify a control signal for generating the vibration sound signal. The processor 305 may generate the vibration sound signal through the audio module 170. The vibration sound signal may be generated based on the vibration frequency of the motor 303.

According to an embodiment, the processor 305 may generate the vibration sound signal based on a first frequency signal and a second frequency signal. The processor 305 may generate the vibration sound signal by mixing a frequency of high harmonics in addition to the vibration frequency of the motor 303, so that it may be recognized by an ear of the user. A frequency that is a multiple of the vibration frequency of the motor 303 may be referred to as a harmonic frequency. According to an embodiment, the vibration sound signal may be generated by synthesizing the first frequency signal and the second frequency signal. A frequency (hereinafter, the first frequency) of the first frequency signal may correspond to the vibration frequency of the motor 303. A frequency (hereinafter, the second frequency) of the second frequency signal may be a multiple (e.g., two or three times) of the vibration frequency of the motor 303. Sound generated by synthesizing the first frequency signal and the second frequency signal may have a similar tone to the first frequency compared to sound generated by synthesizing the first frequency signal and a third frequency signal. A frequency of the third frequency signal may not be a multiple of the first frequency. The third frequency signal having a frequency other than a multiple of the first frequency has a different tone from the vibration sound of the motor, and thus may not be felt by the user as the vibration sound of the motor. An component corresponding to the vibration frequency of the motor may be generated through the harmonic frequency. Accordingly, the user may recognize a harmonic frequency having a frequency that is a multiple of the vibration sound frequency of the motor as motor sound.

It is described that the second frequency signal generating the vibration sound signal is a multiple of the first frequency signal, but embodiments of the present disclosure may not be limited thereto. According to an embodiment, the second frequency may not be a multiple of the first frequency. The at least one processor 120 may generate the vibration sound signal based on the first frequency signal having the first frequency and the second frequency signal having the second frequency. For example, the second frequency may not be the harmonic frequency of the first frequency.

It is described that the vibration sound signal is generated based on two frequency signals, but the embodiments of the present disclosure may not be limited thereto. According to an embodiment, the vibration sound signal may be generated based on a plurality of frequency signals including the first frequency signal and the second frequency signal. The plurality of frequency signals may be three or more.

According to embodiments, a sound pressure of the first frequency signal may be a first sound pressure. A sound pressure of the second frequency signal may be a second sound pressure. The processor 305 may generate the vibration sound signal by synthesizing the first frequency signal and the second frequency signal. For example, the second frequency may be a multiple of the first frequency. This is because the vibration sound signal generated based on the second frequency signal having a frequency that is a multiple of the first frequency has a similar tone to the first frequency signal. The third frequency signal having a frequency other than a multiple of the first frequency has a different tone from the vibration sound of the motor 303, and thus may not be felt by the user as the vibration sound of the motor 303. The user may recognize the harmonic frequency having a frequency that is a multiple of the vibration sound frequency of the motor 303 as the vibration sound of the motor 303. This is because the component corresponding to the vibration frequency of the motor 303 may be generated through the harmonic frequency.

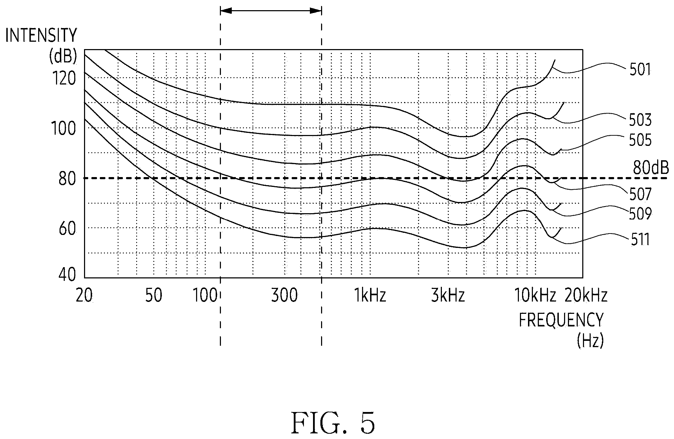

According to an embodiment, as the second sound pressure is larger, the user may hear the vibration sound signal better even with the same intensity. For example, a frequency at which the motor 303 vibrates may be about 150 Hz. In a frequency range (e.g., from about 150 Hz to about 600 Hz) of the vibration sound signal, as the second frequency of the second frequency signal gets higher, the user may hear the second frequency signal better even though the sound intensity is the same. Therefore, the user hears a vibration sound signal generated based on the second frequency signal with a large second sound pressure better than a vibration sound signal generated based on the second frequency signal with a small second sound pressure. The reason why the user hears sound better as the frequency of the sound gets higher will be described in FIG. 5.

According to an embodiment, as the first sound pressure, which is the sound pressure of the first frequency signal, is larger, the user may feel a lower sense of heterogeneity between the vibration of the actual motor 303 and the vibration sound signal. This is because, as the first sound pressure is larger, a difference between a frequency of vibration transmitted through the tactile sense and a frequency of the vibration sound signal transmitted through the auditory sense may be smaller. For example, in case that the motor 303 transmitted through the tactile sense vibrates at about 150Hz and the frequency of the vibration sound signal transmitted through the auditory sense is about 150Hz, the user may feel the lower sense of heterogeneity due to a mismatch between the tactile sense and the auditory sense than in a case that the frequency of the vibration sound signal transmitted through the auditory sense is about 300Hz. However, even though the user feels the sense of heterogeneity in the vibration sound signal of about 300Hz, the vibration sound signal of about 300Hz is the harmonic frequency, so it can be recognized as vibration sound of a motor vibrating at a different frequency from the motor 303 of the electronic device 101.

According to an embodiment, the processor 305 may determine the first sound pressure of the first frequency signal having a frequency corresponding to the vibration frequency of the motor and the second sound pressure of the second frequency signal having a frequency different from the vibration frequency of the motor (e.g., a multiple of the vibration frequency of the motor) based on an intensity of sound (hereinafter, ambient sound) input through the microphone 307. For example, in case that the intensity of the sound input through the microphone 307 is greater than or equal to a threshold, the processor 305 may determine the first sound pressure and the second sound pressure so that the first sound pressure is to be lower than the second sound pressure. Setting the second sound pressure higher than the first sound pressure is to increase transmissibility of the vibration sound signal generated based on the first frequency signal and the second frequency signal. For example, in case that the intensity of the sound input through the microphone 307 is lower than the threshold, the processor 305 may determine the first sound pressure and the second sound pressure, so that the first sound pressure is larger than the second sound pressure. Setting the first sound pressure higher than the second sound pressure is to reduce the sense of heterogeneity between the vibration sound signal generated based on the first frequency signal and the vibration of the motor 303.

According to an embodiment, the vibration sound signal may be generated based on a signal having the vibration frequency of the motor 303 and a signal having a frequency of a multiple of the vibration frequency of the motor 303. In case that the intensity of the signal (e.g., the first frequency signal having the first sound pressure) having the vibration frequency of the motor 303 is lower than the intensity of the signal (e.g., the second frequency signal having the second sound pressure) having the frequency of a multiple of the vibration frequency of the motor 303, the vibration sound signal may be referred to as the first vibration sound signal. In case that the intensity of the signal having the vibration frequency of the motor 303 is larger than the intensity of the signal having the frequency of a multiple of the vibration frequency of the motor 303, the vibration sound signal may be referred to as the second vibration sound signal.

According to embodiments, the processor 305 may generate a vibration sound signal through a filter. For example, the processor 305 may set a pass frequency of the high-pass filter to a first pass frequency, in order to generate the first vibration sound signal. The processor 305 may generate the first vibration sound signal based on an audio signal passed through the high-pass filter. The first vibration sound signal may have higher transmissibility than the second vibration sound signal. For example, the processor 305 may set the pass frequency of the high-pass filter to a second pass frequency, in order to generate the second vibration sound signal. The second pass frequency may be lower than the first pass frequency. The processor 305 may generate the second vibration sound signal based on the audio signal passed through the high-pass filter. The second vibration sound signal may have the lower sense of heterogeneity than the first vibration sound signal.

According to embodiments, the processor 305 may generate a vibration sound signal through the speaker 309. According to an embodiment, the processor 305 may generate the first vibration sound signal and/or the second vibration sound signal based on the intensity of the ambient sound identified through the microphone 307. For example, in case that the intensity of the sound input through the microphone 307 is greater than or equal to the threshold, the first sound pressure of the first frequency signal may be smaller than the second sound pressure of the second frequency signal, in order to improve the transmissibility of the vibration sound signal, reduce current consumption, and reduce heat generation of the speaker. For example, in case that the intensity of the sound input through the microphone 307 is lower than the threshold, the first sound pressure of the first frequency signal may be larger than the second sound pressure of the second frequency signal, in order to reduce the sense of heterogeneity between the vibration of the motor 303 and the vibration sound signal.

According to an embodiment, the processor 305 may change the intensity of the vibration sound signal (e.g., the first vibration sound signal and/or the second vibration sound signal) based on whether a telephone application is in use. For example, the processor 305 may identify whether the electronic device 301 is running (or is executed) the telephone application. The processor 305 may generate the first vibration sound signal and/or the second vibration sound signal with a first intensity, based on identifying a control signal for operating the motor 303 received while the telephone application is running (or is executed). The processor 305 may generate the first vibration sound signal and/or the second vibration sound signal with a second intensity, based on the control signal for operating the motor 303 received while the telephone application is not running. The first intensity may be smaller than the second intensity. This is because a probability that the user is at a short distance with the electronic device 301 is high while the telephone application is running (or is executed). Additionally, this is because a probability that the user is in a state of being in contact with the electronic device 301 is high while the telephone application is running (or is executed). A vibration sound signal of a large intensity generated in the state in which the user is in contact with the electronic device 301 may degrade a user experience. Therefore, the processor 305 may set the intensity of the vibration sound signal (e.g., the first vibration sound signal and/or the second vibration sound signal) while the telephone application is running to be lower than the intensity of the vibration sound signal while the telephone application is not running (or is not executed).

According to an embodiment, the processor 305 may change the intensity of the vibration sound signal (e.g., the first vibration sound signal and/or the second vibration sound signal) based on whether the electronic device 301 is in use. For example, the processor 305 may identify that the electronic device 301 is in use through at least one sensor. The at least one sensor may be a proximity sensor. The at least one sensor may detect that a body of the user is within a predetermined range from the electronic device 301. The processor 305 may generate the first vibration sound signal and/or the second vibration sound signal with a third intensity based on identifying the control signal for operating the motor 303 received while the electronic device 301 is in use. The processor 305 may generate the first vibration sound signal and/or the second vibration sound signal with the second intensity based on the control signal for operating the motor 303 received while the electronic device 301 is not in use. The third intensity may be smaller than the second intensity. This is because a probability that the user is at a short distance with the electronic device 310 is high while the electronic device 301 is in use. Additionally, this is because a probability that the user is in a state of being in contact with the electronic device 301 is high while the electronic device 301 is in use. The vibration sound signal of the large intensity generated in the state in which the user is in contact with the electronic device 301 may degrade the user experience. Therefore, the processor 305 may set the intensity of the vibration sound signal (e.g., the first vibration sound signal and/or the second vibration sound signal) to be lower than the intensity of the vibration sound signal while the electronic device 301 is not in use.

According to an embodiment, the processor 305 may change the intensity of the vibration sound signal (e.g., the first vibration sound signal and/or the second vibration sound signal) based on whether the electronic device 301 is in use. For example, the processor 305 may identify whether an application is running. While the application is in use, the electronic device 301 may be in use. The application may be a messenger application, a video sharing application, a game application, and/or a music playback application. The processor 305 may generate the first vibration sound signal and/or the second vibration sound signal with the third intensity based on identifying the control signal for operating the motor 303 received while the application is running. The processor 305 may generate the first vibration sound signal and/or the second vibration sound signal with the second intensity based on the control signal for operating the motor 303 received while the application is not running. The third intensity may be smaller than the second intensity. This is because a probability that the user is at a short distance with the electronic device 301 is high while the application is running. Additionally, this is because a probability that the user is in a state of being in contact with the electronic device 301 is high while the application is running. The vibration sound signal of the large intensity generated in the state in which the user is in contact with the electronic device 301 may degrade the user experience. Therefore, the processor 305 may set the intensity of the vibration sound signal (e.g., the first vibration sound signal and/or the second vibration sound signal) to be lower than the intensity of the vibration sound signal while the application is not running.

According to an embodiment, the processor 305 may change the intensity of the vibration sound signal (e.g., the first vibration sound signal and/or the second vibration sound signal) based on identifying that the vibration sound signal (e.g., the first vibration sound signal and/or the second vibration sound signal) is generated for a designated time. For example, the processor 305 may identify that the first vibration sound signal and/or the second vibration sound signal are generated through the speaker for the designated time. For example, the designated time may be 10 seconds. The first vibration sound signal or the second vibration sound signal may be generated with a fourth intensity. The processor 305 may generate the first vibration sound signal or the second vibration sound signal through the speaker with a fifth intensity based on identifying that the first vibration sound signal or the second vibration sound signal is generated through the speaker for the designated time. The fourth intensity may be smaller than the fifth intensity. If the vibration sound signal is continuously generated for the designated time, there is a high probability that the user has not detected the vibration sound signal. For example, the user may not be able to check a telephone notification of the electronic device 301 since the user is far from the electronic device 301. For example, the user may not be able to check the alarm notification since the user is in a deep sleep state. For example, the user may not be able to check the telephone notification since the user is in an environment with high ambient noise. Therefore, in case that the vibration sound signal is generated for a designated period through the speaker 309, the processor 305 may set the intensity of the vibration sound signal (e.g., the first vibration sound signal and/or the second vibration sound signal) higher than the intensity of the vibration sound signal for the designated period, in order for the user to easily detect it.

According to embodiments, the audio module 170 may identify the intensity of the sound input through the microphone 307. The audio module 170 may generate the vibration sound signal through the speaker 309 according to the intensity of the sound. For example, in case that the intensity of the sound input through the microphone 307 is greater than or equal to the threshold, the audio module 170 may generate the first vibration sound signal based on the first frequency signal in accordance with the first sound pressure and the second frequency signal in accordance with the second sound pressure. The first sound pressure may be smaller than the second sound pressure. The second frequency of the second frequency signal may be a multiple of the first frequency of the first frequency signal. For example, in case that that intensity of the sound is lower than the threshold, the audio module 170 may generate the second vibration sound signal based on a first frequency signal in accordance with a third sound pressure and a second frequency signal in accordance with a fourth sound pressure. The third sound pressure may be larger than the fourth sound pressure. An average frequency of the first vibration sound signal may be higher than an average frequency of the second vibration sound signal.

According to embodiments, the microphone 307 may identify the intensity of the ambient sound. The processor 305 may generate the vibration sound signal based on the intensity of the ambient sound identified through the microphone 307. According to embodiments, the speaker 309 may generate the vibration sound signal. The vibration sound signal may correspond to the vibration of the motor 303. The processor 305 may generate the vibration sound signal by synthesizing the first frequency signal and the second frequency signal. The vibration sound generated by the motor 303 may have a small intensity. Even though the motor 303 operates, the user may not be able to detect the vibration by the auditory sense. Therefore, when the electronic device 301 is not in contact with the user, the user may not be able to detect the vibration of the motor 303. The electronic device 301 may generate the vibration sound signal corresponding to the vibration through the speaker 309 in order to provide the user with a notification through the auditory sense.

In FIG. 3, it is described that the second frequency signal for generating the vibration sound signal is a multiple of the first frequency signal, but the embodiments of the present disclosure may not be limited thereto. According to an embodiment, the second frequency may not be a multiple of the first frequency. The at least one processor 120 may generate the vibration sound signal based on the first frequency signal having the first frequency and the second frequency signal having the second frequency. For example, the second frequency may not be the harmonic frequency of the first frequency.

In FIG. 3, it is described that the vibration sound signal is generated based on two frequency signals, but the embodiments of the present disclosure may not be limited thereto. According to an embodiment, the vibration sound signal may be generated based on a plurality of frequency signals including the first frequency signal and the second frequency signal. The plurality of frequency signals may be three or more.

In FIG. 3, it is described that the vibration sound signal is generated using the high-pass filter, but the embodiments of the present disclosure are not limited thereto. According to an embodiment, the at least one processor 120 may generate the vibration sound signal through a variable filter. For example, the at least one processor 120 may generate the vibration sound signal through the high-pass filter, a low-pass filter, or a band-pass filter, and the like. According to an embodiment, the at least one processor 120 may generate the vibration sound signal through the low-pass filter. For example, the at least one processor 120 may generate the first vibration sound signal through the low-pass filter. The first vibration sound signal may be generated based on identifying ambient sound greater than or equal to the threshold. For example, the at least one processor 120 may set a pass frequency of the low-pass filter to the first pass frequency in order to generate the first vibration sound signal. The at least one processor 120 may generate the first vibration sound signal based on an audio signal passed through the low-pass filter. The first vibration sound signal may have higher transmissibility than the second vibration sound signal. For example, the at least one processor 120 may generate a second vibration sound signal through the low-pass filter. The second vibration sound signal may be generated based on identifying the ambient sound lower than the threshold. For example, the at least one processor 120 may set a pass frequency of the low-pass filter to the second pass frequency in order to generate the second vibration sound signal. The at least one processor 120 may generate the second vibration sound signal based on the audio signal passed through the low-pass filter. The first pass frequency in the low-pass filter may be higher than the second pass frequency in the low-pass filter. The second vibration sound signal may have a lower sense of heterogeneity than the first vibration sound signal.

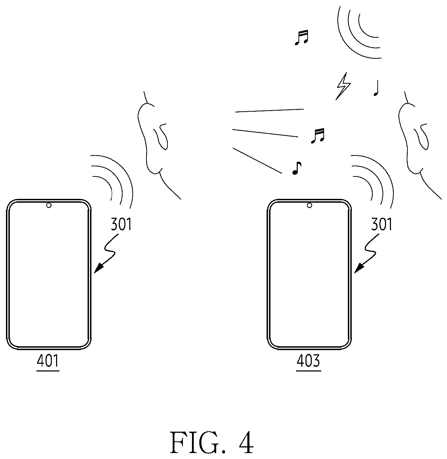

FIG. 4 illustrates an example of an environment in which a vibration sound signal is generated, according to embodiments.

Referring to FIG. 4, in a state 401, an intensity of ambient sound input through a microphone (e.g., the microphone 307 of FIG. 3) may lower than a threshold.

According to embodiments, at least one processor (e.g., the processor 120 of FIG. 1) may generate a vibration sound signal corresponding to vibration of a motor (e.g., the motor 303 of FIG. 3). According to an embodiment, the at least one processor 120 may provide a user with a notification through the vibration of the motor 303 included in an electronic device (e.g., the electronic device 301 of FIG. 3). For example, the at least one processor 120 may provide the user with a call reception notification through the vibration of the motor 303. For example, the at least one processor 120 may provide the user with an alarm notification through the vibration of the motor 303.

According to an embodiment, the vibration of the motor 303 may be detected by the user with a tactile sense. Even though the motor 303 operates, the user may not detect vibration sound by the motor 303 by an auditory sense. Therefore, when the electronic device 301 is not in contact with the user, the user may not be able to detect the vibration of the motor 303. The electronic device 301 may generate the vibration sound signal corresponding to the vibration through a speaker (e.g., the speaker 309 of FIG. 3), in order to provide the user with a notification through the auditory sense. In an embodiment, the vibration sound signal may be generated based on a vibration frequency of the motor 303. For example, the vibration sound signal may be generated by synthesizing a first frequency signal and a second frequency signal. A first frequency of the first frequency signal may be the vibration frequency of the motor 303. A second frequency of the second frequency signal may be an integer multiple of the vibration frequency of the motor 303. Sound generated by synthesizing the first frequency signal and the second frequency signal may have a similar tone to the first frequency compared to sound generated by synthesizing the first frequency signal and a third frequency signal. A frequency of the third frequency signal may not be an integer multiple of the first frequency.

According to an embodiment, a sound pressure of the first frequency signal may be a first sound pressure. A sound pressure of the second frequency signal may be a second sound pressure. The first frequency may be the vibration frequency of the motor 303. The second frequency may be an integer multiple of the vibration frequency of the motor 303. The at least one processor 120 may generate the vibration sound signal by synthesizing the first frequency signal and the second frequency signal. According to an embodiment, the at least one processor 120 may designate the first sound pressure and the second sound pressure based on the intensity of the ambient sound input through the microphone 307. For example, in case that the intensity of the sound input through the microphone 307 is lower than the threshold, the first sound pressure may be larger than the second sound pressure.

According to an embodiment, as the first sound pressure is larger, the user may feel a lower sense of heterogeneity between the vibration of the actual motor 303 and the vibration sound signal. This is because, as the first sound pressure is larger, a difference between a frequency of vibration transmitted through the tactile sense and a frequency of the vibration sound signal transmitted through the auditory sense may be smaller. For example, in case that the motor 303 transmitted through the tactile sense vibrates at about 150Hz and the frequency of the vibration sound signal transmitted through the auditory sense is about 1500Hz, the user may feel a lower sense of heterogeneity due to mismatch between the tactile sense and the auditory sense than in a case that the frequency of the vibration sound signal transmitted through the auditory sense is about 300Hz. However, even if the user feels a sense of heterogeneity in the vibration sound signal of about 300Hz, the vibration sound signal of about 300Hz is a harmonic frequency, so it can be recognized as vibration sound of a motor vibrating at a different frequency from the motor 303 of the electronic device 101.

In a state 403, the intensity of the ambient sound input through the microphone 307 may be greater than or equal to the threshold. The vibration sound signal of the electronic device 301 may not be detected by the user by the ambient sound. The at least one processor 120 may generate the first vibration sound signal through the speaker 309.

According to an embodiment, the at least one processor 120 may generate the first vibration sound signal based on the first frequency signal in accordance with the first sound pressure and the second frequency signal in accordance with the second sound pressure. The first sound pressure may be smaller than the second sound pressure. The first frequency may be the vibration frequency of the motor 303. The second frequency may be an integer multiple of the vibration frequency of the motor 303.

According to an embodiment, as the second sound pressure is larger, the user may hear the vibration sound signal better even with the same intensity. For example, the vibration frequency of the motor 303 may be about 150 Hz. In a frequency band (e.g., between about 150 Hz and about 600 Hz) of the vibration sound signal, as the frequency of the vibration sound signal gets higher, the user may hear the vibration sound signal better. Thus, when the first vibration sound signal is generated, the second sound pressure may be larger than the first sound pressure.

In FIG. 4, it is described that the second frequency signal for generating the vibration sound signal is a multiple of the first frequency signal, but embodiments of the present disclosure may not be limited thereto. According to an embodiment, the second frequency may not be a multiple of the first frequency. The at least one processor 120 may generate the vibration sound signal based on the first frequency signal having the first frequency and the second frequency signal having the second frequency. In other words, the second frequency may not be the harmonic frequency of the first frequency.

In FIG. 4, it is described that the vibration sound signal is generated based on two frequency signals, but the embodiments of the present disclosure may not be limited thereto. According to an embodiment, the vibration sound signal may be generated based on a plurality of frequency signals including the first frequency signal and the second frequency signal. The plurality of frequency signals may be three or more.

FIG. 5 illustrates an equal loudness contour according to a frequency, according to embodiments. The equal loudness contour may indicate an actual auditory response of a user according to a frequency of sound.

Referring to FIG. 5, a graph may indicate loudness that varies according to a frequency. An X-axis may be a frequency of the sound. A unit of the X-axis may be hertz (Hz). A Y-axis may be an intensity of the sound. A unit of the Y-axis may be decibel (dB). A first line 501 indicates an actual intensity of sound according to a frequency of sounds that the user feels as about 100 dB. A second line 503 indicates an actual intensity of sound according to a frequency of sounds that the user feels as about 90 dB. A third line 505 indicates an actual intensity of sound according to a frequency of sounds that the user feels as about 80 dB. A fourth line 507 indicates an actual intensity of sound according to a frequency of sounds that the user feels as about 70 dB. A fifth line 509 indicates an actual intensity of sound according to a frequency of sounds that the user feels as about 60 dB. A sixth line 511 indicates an actual intensity of sound according to a frequency of sounds that the user feels as about 50 dB.

According to an embodiment, a vibration sound signal may be generated based on a first frequency signal and a second frequency signal. The first frequency signal may be about 150 Hz, which is a frequency of vibration sound of a motor (e.g., the motor 303 of FIG. 3). A second frequency of the second frequency signal may be a multiple of a first frequency of the first frequency signal. For example, the second frequency of the second frequency signal may be about 300 Hz. For example, the second frequency of the second frequency signal may be about 450 Hz. For example, the second frequency of the signal of the second frequency may be about 600 Hz.

According to an embodiment, in a frequency band between about 150 Hz and about 600 Hz, the frequency of the sound is higher, the user may recognize it as sound with a higher intensity. For example, sound that is about 80 dB at about 150 Hz may be felt as smaller sound than sound that is about 80 dB at about 300 Hz. For example, sound having a frequency of about 300 Hz and sound having a frequency of about 150 Hz, which is a higher intensity, may be felt by the user as sound with the same intensity. For example, according to a frequency section, sound with a high frequency may be heard better by the user even with a low intensity compared to sound with a low frequency.

According to an embodiment, in a frequency range (e.g., from about 150Hz to about 600Hz) of the vibration sound signal, as the frequency is larger, the user may feel (or perceive) higher frequencies as louder than lower frequencies, even if the sound intensity is the same.. Therefore, in case that a sound pressure of the second frequency signal is larger than a sound pressure of the first frequency signal when the vibration sound signal is generated, transmissibility of the vibration sound signal may be larger than in a case that the sound pressure of the second frequency signal is smaller than the sound pressure of the first frequency signal. For example, transmissibility of the first vibration sound signal may be larger than transmissibility of the second vibration sound signal. The first vibration sound signal may be generated when the intensity of the ambient sound identified through the microphone is greater than or equal to the threshold. The second vibration sound signal may be generated when the intensity of the ambient sound identified through the microphone is lower than the threshold.

In FIG. 5, it is described that the second frequency signal for generating the vibration sound signal is a multiple of the first frequency signal, but the embodiments of the present disclosure may not be limited thereto. According to an embodiment, the second frequency may not be a multiple of the first frequency. The at least one processor 120 may generate the vibration sound signal based on the first frequency signal having the first frequency and the second frequency signal having the second frequency. In other words, the second frequency may not be a harmonic frequency of the first frequency.

In FIG. 5, it is described that the vibration sound signal is generated based on two frequency signals, but the embodiments of the present disclosure may not be limited thereto. According to an embodiment, the vibration sound signal may be generated based on a plurality of frequency signals including the first frequency signal and the second frequency signal. The plurality of frequency signals may be three or more.

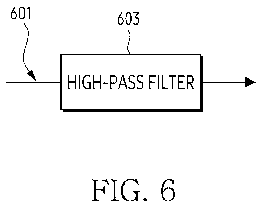

FIG. 6 illustrates an example of a method of generating a vibration sound signal through a filter, according to embodiments.

Referring to FIG. 6, a vibration sound signal may be generated based on an audio signal 601. At least one processor 120 may generate a first vibration sound signal. The at least one processor 120 may generate a second vibration sound signal. A high-pass filter 603 may pass a signal having a frequency greater than or equal to a designated value.

According to embodiments, the at least one processor 120 may generate the first vibration sound signal through the filter. The first vibration sound signal may be generated based on identifying ambient sound greater than or equal to a threshold. For example, the at least one processor 120 may set a pass frequency of the high-pass filter 603 to a first pass frequency, in order to generate the first vibration sound signal. The at least one processor 120 may generate the first vibration sound signal based on an audio signal passed through the high-pass filter 603. The first vibration sound signal may have higher transmissibility than the second vibration sound signal.

According to embodiments, the at least one processor 120 may generate the second vibration sound signal through the filter. The second vibration sound signal may be generated based on identifying the ambient sound lower than the threshold. For example, the at least one processor 120 may set the pass frequency of the high-pass filter 603 to a second pass frequency, in order to generate the second vibration sound signal. The at least one processor 120 may generate the second vibration sound signal based on an audio signal passed through the high-pass filter 603. The second vibration sound signal may have a lower sense of heterogeneity than the first vibration sound signal. The first pass frequency may be higher than the second pass frequency.

In FIG. 6, a case of generating the vibration sound signal through a single filter is described, but embodiments of the present disclosure are not limited thereto. According to embodiments, the at least one processor 120 may generate the vibration sound signal through a plurality of filters.

In FIG. 6, it is described that the second frequency signal generating the vibration sound signal is a multiple of the first frequency signal, but the embodiments of the present disclosure may not be limited thereto. According to an embodiment, the second frequency may not be a multiple of the first frequency. The at least one processor 120 may generate the vibration sound signal based on the first frequency signal having the first frequency and the second frequency signal having the second frequency. In other words, the second frequency may not be a harmonic frequency of the first frequency.

In FIG. 6, it is described that the vibration sound signal is generated based on two frequency signals, but the embodiments of the present disclosure may not be limited thereto. According to an embodiment, the vibration sound signal may be generated based on a plurality of frequency signals including the first frequency signal and the second frequency signal. The plurality of frequency signals may be three or more.

In FIG. 6, it is described that the vibration sound signal is generated using the high-pass filter, but the embodiments of the present disclosure are not limited thereto. According to an embodiment, the at least one processor 120 may generate the vibration sound signal through a variable filter. For example, the at least one processor 120 may generate the vibration sound signal through the high-pass filter, a low-pass filter, or a band-pass filter. According to an embodiment, the at least one processor 120 may generate the vibration sound signal through a low-pass filter. For example, the at least one processor 120 may generate the first vibration sound signal through the low-pass filter. The first vibration sound signal may be generated based on identifying the ambient sound greater than or equal to the threshold. For example, the at least one processor 120 may set a pass frequency of the low-pass filter to the first pass frequency, in order to generate the first vibration sound signal. The at least one processor 120 may generate the first vibration sound signal based on an audio signal passed through the low-pass filter. The first vibration sound signal may have the higher transmissibility than the second vibration sound signal. For example, the at least one processor 120 may generate the second vibration sound signal through the low-pass filter. The second vibration sound signal may be generated based on identifying the ambient sound lower than the threshold. For example, the at least one processor 120 may set the pass frequency of the low-pass filter to the second pass frequency, in order to generate the second vibration sound signal. The at least one processor 120 may generate the second vibration sound signal based on the audio signal passed through the low-pass filter. The first pass frequency in the low-pass filter may be higher than the second pass frequency in the low-pass filter. The second vibration sound signal may have a lower sense of heterogeneity than the first vibration sound signal.

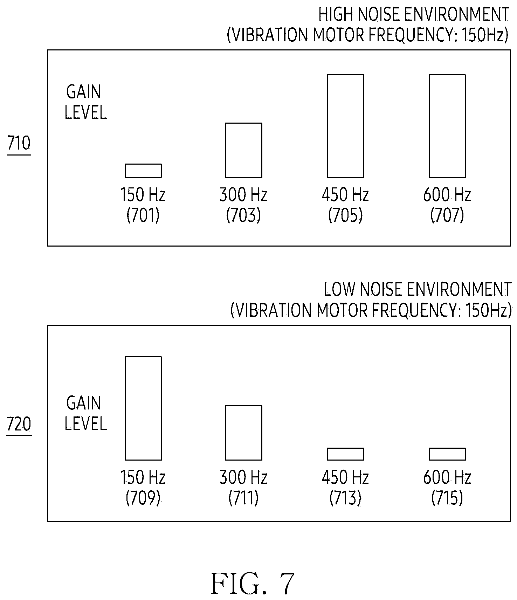

FIG. 7 illustrates an example of a configuration of a first vibration sound signal and a configuration of a second vibration sound signal, according to embodiments.

Referring to FIG. 7, a first graph 710 indicates noise (e.g., ambient sound) greater than or equal to a threshold received through a microphone (e.g., the microphone 307 in FIG. 3) and a signal intensity for each frequency. A histogram 701 indicates a gain of a first frequency signal (e.g., about 150 Hz). A histogram 703 indicates a gain of a second frequency signal (e.g., about 300 Hz). A histogram 705 indicates a gain of a third frequency signal (e.g., about 450 Hz). A histogram 707 indicates a gain of a fourth frequency signal (e.g., about 600 Hz).

According to an embodiment, the first vibration sound signal may be generated by synthesizing the first frequency signal, the second frequency signal, the third frequency signal, and/or the fourth frequency signal. The first vibration sound signal may be generated in case that an intensity of the ambient sound received through the microphone 307 is greater than or equal to the threshold. A frequency of a vibration sound of a motor (e.g., the motor 303 of FIG. 3) may be about 150 Hz. Within about 600 Hz from about 150 Hz, as a frequency of the first vibration sound signal gets higher, a user may hear the first vibration sound signal better. Therefore, as a sound pressure (e.g., the histogram 705) of the third frequency signal and a sound pressure (e.g., the histogram 707) of the fourth frequency signal is larger, the user may hear the first vibration sound signal better compared to a case that the sound pressure 705 of the third frequency signal and the sound pressure 707 of the fourth frequency signal are small. In case that the intensity of the ambient sound is greater than or equal to the threshold, increasing transmissibility of the first vibration sound signal may improve a user experience than lowering a sense of heterogeneity of the first vibration sound. This is because transmissibility of basic sound is not secured in case that the intensity of the ambient sound is greater than or equal to the threshold. Therefore, in case that the intensity of the ambient sound is greater than the threshold, the sound pressure 705 of the third frequency signal and the sound pressure 707 of the fourth frequency signal may be larger than a sound pressure (e.g., the histogram 701) of the first frequency signal and a sound pressure of the second frequency signal (e.g., the histogram 703). Reducing the sound pressure 701 of the first frequency signal and the sound pressure 703 of the second frequency signal may be for improving the transmissibility, reducing current consumption, and/or reducing heat generation of a speaker. This is because increasing the sound pressure 705 of the third frequency signal and the sound pressure 707 of the fourth frequency signal may have higher transmissibility to the user than increasing the sound pressure 701 of the first frequency signal and the sound pressure 703 of the second frequency signal even though the same power is used. In order to improve the transmissibility by increasing the sound pressure 701 of the first frequency signal and the sound pressure 703 of the second frequency signal, more power may be consumed than in a case of increasing the sound pressure 705 of the third frequency signal and the sound pressure 707 of the fourth frequency signal. In case that a large amount of power is consumed, heat generation of a speaker coil may occur more than in case that a small amount of power is consumed. The first vibration sound signal may have higher transmissibility than the second vibration sound signal.

A second graph 720 indicates noise (e.g., ambient sound) lower than the threshold received through the microphone 307 and the signal intensity for each frequency. A histogram 709 indicates a gain of the first frequency signal (e.g., about 150 Hz). A histogram 711 indicates a gain of the second frequency signal (e.g., about 300 Hz). A histogram 713 indicates a gain of the third frequency signal (e.g., about 450 Hz). A histogram 715 indicates a gain of the fourth frequency signal (e.g., about 600 Hz).

According to an embodiment, the second vibration sound signal may be generated by synthesizing the first frequency signal, the second frequency signal, the third frequency signal, and/or the fourth frequency signal. In case that the intensity of the ambient sound received through the microphone 307 is lower than the threshold, the second vibration sound signal may be generated. The frequency of the vibration sound of the motor 303 may be about 150 Hz. Within about 600 Hz from about 150 Hz, as the frequency of the second vibration sound signal gets lower, a sense of heterogeneity between the vibration of the motor 303 and the second vibration sound signal may be reduced. As a sound pressure (e.g., the histogram 709) of the first frequency signal and a sound pressure (e.g., the histogram 711) of the second frequency signal is larger, the sense of heterogeneity may be reduced compared to a case that the sound pressure 709 of the first frequency signal and the sound pressure 711 of the second frequency signal are small. In case that the intensity of the ambient sound is lower than the threshold, lowering the sense of heterogeneity of the second vibration sound signal may improve the user experience than increasing the transmissibility of the second vibration sound signal. This is because the transmissibility of the basic sound is secured in case that the intensity of the ambient sound is lower than the threshold. Therefore, in case that the intensity of the ambient sound is lower than the threshold, a sound pressure (e.g., the histogram 713) of the third frequency signal and a sound pressure (e.g., the histogram 715) of the fourth frequency signal may be smaller than the sound pressure 709 of the first frequency signal and the sound pressure 711 of the second frequency signal. The second vibration sound signal may have a lower sense of heterogeneity than the first vibration sound signal.

According to an embodiment, an amplifier for generating an audio signal may release amplitude control, and perform temperature control, in order to generate the second vibration sound signal. The amplifier for generating the audio signal may release the amplitude control, to generate the second vibration sound signal. The amplifier for generating the audio signal may perform the temperature control to generate the second vibration sound signal. When an audio signal having a frequency less than or equal to a reference value is input, the amplifier for generating the audio signal may reduce an amplitude of the audio signal input through the amplitude control. When the amplitude control is released, the amplifier may not reduce the amplitude even though the audio signal having the frequency less than or equal to the reference value is input. Accordingly, the at least one processor may generate the second vibration sound signal by using a frequency signal of a relatively low frequency band. The at least one processor 120 may maintain the temperature control even though the amplitude control is released. The temperature control may be performed based on a temperature of a coil included in the speaker (e.g., the speaker 309 of FIG. 3). Based on the temperature of the coil greater than or equal to the reference value, the at least one processor 120 may perform an operation for lowering the temperature of the coil.

According to an embodiment, the electronic device (e.g., the electronic device 101 of FIG. 1) may utilize a space behind the speaker 309 in the electronic device as a space for resonating the sound of the speaker 309. When the space behind the speaker 309 is divided into a back glass of the electronic device, the back glass may vibrate by the vibration sound signal. In order for the user to detect the vibration sound signal better, the at least one processor 120 may generate the vibration sound signal so that the vibration of the back glass is to be larger.

In FIG. 7, it is described that the second frequency signal generating the vibration sound signal is a multiple of the first frequency signal, but embodiments of the present disclosure may not be limited thereto. According to an embodiment, the second frequency may not be a multiple of the first frequency. The at least one processor 120 may generate the vibration sound signal based on the first frequency signal having the first frequency and the second frequency signal having the second frequency. In other words, the second frequency may not be a harmonic frequency of the first frequency.

In FIG. 7, it is described that the vibration sound signal is generated based on two frequency signals, but the embodiments of the present disclosure may not be limited thereto. According to an embodiment, the vibration sound signal may be generated based on a plurality of frequency signals including the first frequency signal and the second frequency signal. The plurality of frequency signals may be three or more.

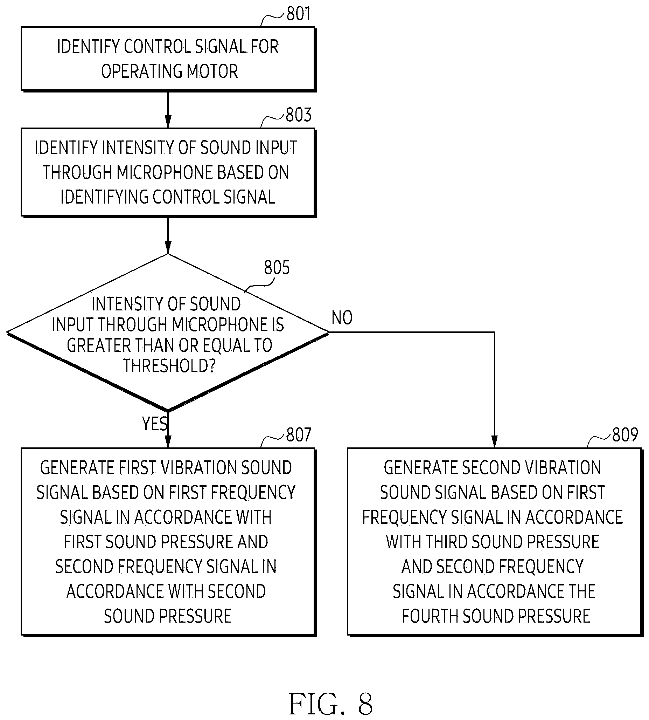

FIG. 8 illustrates a flow of an operation of an electronic device for generating a first vibration sound signal or a second vibration sound signal, according to embodiments. A vibration sound signal may mean a signal generated based on a signal having a vibration frequency of a motor and a signal having a frequency of a multiple of the vibration frequency of the motor. In case that an intensity of the signal having the vibration frequency of the motor is smaller than an intensity of the signal having the frequency of a multiple of the vibration frequency of the motor, the vibration sound signal may be referred to as the first vibration sound signal. In case that the intensity of the signal having the vibration frequency of the motor is larger than the intensity of the signal having the frequency of a multiple of the vibration frequency of the motor, the vibration sound signal may be referred to as the second vibration sound signal.

Referring to FIG. 8, in operation 801, at least one processor 120 may identify a control signal for operating the motor. According to an embodiment, the motor (e.g., the motor 303 of FIG. 3) may operate to provide a user with a notification through vibration. For example, the motor 303 may operate to provide the user with a call reception notification through the vibration. For example, the motor 303 may operate to provide the user with a messenger notification through the vibration. For example, the motor 303 may operate to provide the user with an alarm notification through the vibration. According to an embodiment, the vibration of the motor 303 may be detected by the user with a tactile sense. The vibration sound signal generated by the motor 303 may have a small intensity. Even though the motor 303 operates, the user may not be able to detect the vibration with an auditory sense. Therefore, in case that the electronic device 301 is not in contact with the user, the user may not be able to detect the vibration of the motor 303.

In operation 803, the at least one processor 120 may identify an intensity of sound input through a microphone based on identifying the control signal. The at least one processor 120 may generate the vibration sound signal based on an intensity of ambient sound identified through the microphone (e.g., the microphone 307 of FIG. 3).

In operation 805, the at least one processor 120 may identify whether the intensity of the sound input through the microphone is greater than or equal to a threshold. In case that the intensity of the sound input through the microphone is greater than or equal to the threshold, the at least one processor 120 may perform operation 807. In case that the intensity of the sound input through the microphone is lower than the threshold, the at least one processor 120 may perform operation 809. According to an embodiment, the at least one processor 120 may identify the intensity of the sound input through the microphone 307, and generate the vibration sound signal through a speaker (e.g., the 309 of FIG. 3) according to the intensity of the sound. For example, in case that the intensity of the sound input through the microphone 307 is greater than or equal to the threshold, the at least one processor 120 may generate a first vibration sound signal based on a first frequency signal in accordance with a first sound pressure and a second frequency signal in accordance with a second sound pressure. The first sound pressure may be smaller than the second sound pressure. The second frequency of the second frequency signal may be a multiple of the first frequency of the first frequency signal. For example, in case that the intensity of the sound is lower than the threshold, the at least one processor 120 may generate a second vibration sound signal based on a first frequency signal in accordance with a third sound pressure and a second frequency signal in accordance with a fourth sound pressure. The third sound pressure may be larger than the fourth sound pressure. An average frequency of the first vibration sound signal may be higher than an average frequency of the second vibration sound signal.

In the operation 807, the at least one processor 120 may generate the first vibration sound signal based on the first frequency signal in accordance with the first sound pressure and the second frequency signal in accordance with the second sound pressure. For example, in the at least one processor 120, in case that the intensity of the sound input through the microphone 307 is greater than or equal to the threshold, the first sound pressure may be smaller than the second sound pressure. The at least one processor 120 may set the second sound pressure higher than the first sound pressure, in order to improve transmissibility of the vibration sound signal generated based on the first frequency signal and the second frequency signal, reduce current consumption, and reduce heat generation of the speaker. This is because increasing the second sound pressure of the second frequency signal may have higher transmissibility to the user than increasing the first sound pressure of the first frequency signal even though the same current is used. In order to improve the transmissibility by increasing the first sound pressure, more power may be consumed compared to a case of increasing the second sound pressure. In case that a large amount of power is consumed, heat generation of a speaker coil may be generated more than in case that a small amount of power is consumed.

In the operation 809, the at least one processor 120 may generate the second vibration sound signal based on the first frequency signal in accordance with the third sound pressure and the second frequency signal in accordance with the fourth sound pressure. For example, in the at least one processor 120, in case that the intensity of the sound input through the microphone 307 is lower than the threshold, the third sound pressure may be larger than the fourth sound pressure. The at least one processor 120 may set the third sound pressure higher than the fourth sound pressure, in order to reduce the sense of heterogeneity between the vibration sound signal generated based on the first frequency signal and the second frequency signal, and the vibration of the motor 303. In case that the intensity of the ambient sound is lower than the threshold lowering the sense of heterogeneity of the second vibration sound signal may improve a user experience than increasing the transmissibility of the second vibration sound signal. This is because transmissibility of basic sound is secured in case that the intensity of the ambient sound is lower than the threshold.

FIG. 8 illustrates identifying the intensity of the sound input through the microphone based on identifying the control signal for operating the motor, but embodiments of the present disclosure are not limited thereto. According to an embodiment, the intensity of the sound input through the microphone may be identified based on identifying a control signal for generating the first vibration sound signal or the second vibration sound signal.

In FIG. 8, it is described that the second frequency signal generating the vibration sound signal is a multiple of the first frequency signal, but the embodiments of the present disclosure may not be limited thereto. According to an embodiment, the second frequency may not be a multiple of the first frequency. The at least one processor 120 may generate the vibration sound signal based on the first frequency signal having the first frequency and the second frequency signal having the second frequency. In other words, the second frequency may not be a harmonic frequency of the first frequency.

In FIG. 8, it is described that the vibration sound signal is generated based on two frequency signals, but the embodiments of the present disclosure may not be limited thereto. According to an embodiment, the vibration sound signal may be generated based on a plurality of frequency signals including the first frequency signal and the second frequency signal. The plurality of frequency signals may be three or more.

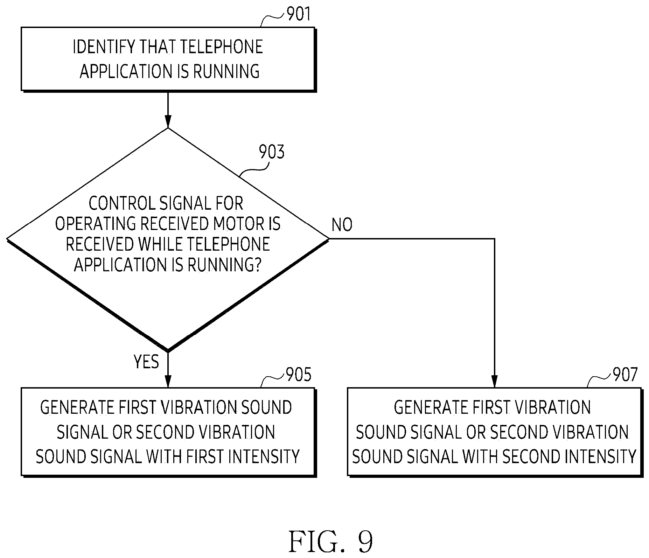

FIG. 9 illustrates a flow of an operation of an electronic device for adjusting an intensity of a vibration sound signal according to whether a telephone application is running, according to embodiments.

Referring to FIG. 9, in operation 901, at least one processor 120 may identify that the telephone application is running. For example, a user may perform a telephone call through an electronic device (e.g., the electronic device 101 of FIG. 1).

In operation 903, the at least one processor 120 may identify whether a control signal for operating a received motor is received while the telephone application is running. In case that the control signal for operating the received motor is received while the telephone application is running, the at least one processor 120 may perform operation 905. In case that the control signal for operating the received motor is not received while the telephone application is running, the at least one processor 120 may perform operation 907. According to an embodiment, while the user is using the telephone application, a messenger notification through vibration may be provided to the user. According to another embodiment, while the user is using the telephone application, an alarm notification may be provided to the user. While the telephone application is running, a probability that the user is at a short distance with the electronic device 101 is high. In addition, while the telephone application is running, a probability that the user is in a state of being in contact with the electronic device 101 is high. A vibration sound signal of a large intensity generated in a state that the user is in contact with the electronic device 101 may degrade a user experience. Therefore, the at least one processor 120 may adjust the intensity of the vibration sound signal (e.g., a first vibration sound signal and/or a second vibration sound signal) according to whether the telephone application is running.

In operation 905, the at least one processor 120 may generate the first vibration sound signal or the second vibration sound signal with a first intensity. According to an embodiment, the processor 305 may set the intensity of the vibration sound signal (e.g., the first vibration sound signal or the second vibration sound signal) to be lower than an intensity of the vibration sound signal while the telephone application is not running.

In operation 907, the at least one processor 120 may generate the first vibration sound signal or the second vibration sound signal with a second intensity. The second intensity may be larger than the first intensity. This is because the vibration sound signal of the large intensity generated in the state that the user is in contact with the electronic device 101 may degrade the user experience.

In FIG. 9, it is described that a second frequency signal for generating the vibration sound signal is a multiple of a first frequency signal, but embodiments of the present disclosure may not be limited thereto. According to an embodiment, the second frequency may not be a multiple of the first frequency. The at least one processor 120 may generate the vibration sound signal based on the first frequency signal having a first frequency and the second frequency signal having a second frequency. In other words, the second frequency may not be a harmonic frequency of the first frequency.

In FIG. 9, it is described that the vibration sound signal is generated based on two frequency signals, but the embodiments of the present disclosure may not be limited thereto. According to an embodiment, the vibration sound signal may be generated based on a plurality of frequency signals including the first frequency signal and the second frequency signal. The plurality of frequency signals may be three or more.

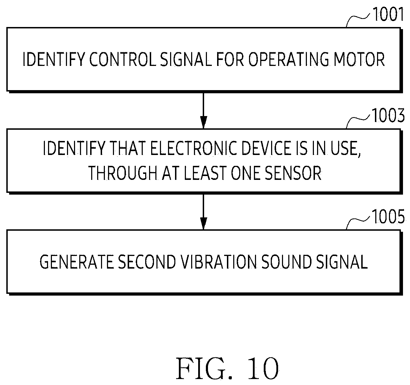

FIG. 10 illustrates a flow of an operation of an electronic device for adjusting a vibration sound signal according to the electronic device being identified to be in use through a sensor, according to embodiments.

Referring to FIG. 10, in operation 1001, at least one processor (e.g., the processor 120 of FIG. 1) may identify a control signal for operating a motor (e.g., the motor 303 of FIG. 3). According to an embodiment, the motor 303 may operate to provide a user with a notification through vibration. For example, the motor 303 may operate to provide the user with a call reception notification through the vibration. For example, the motor 303 may operate to provide the user with a messenger notification through the vibration. For example, the motor 303 may operate to provide the user with an alarm notification through the vibration. According to an embodiment, the vibration of the motor 303 may be detected by the user with a tactile sense. The vibration sound signal generated by the motor 303 may have a small intensity. Even though the motor 303 operates, the user may not be able to detect the vibration with an auditory sense. Therefore, when the electronic device 301 is not in contact with the user, the user may not be able to detect the vibration of the motor 303.

In operation 1003, the at least one processor 120 may identify that the electronic device (e.g., the electronic device 301 of FIG. 3) is in use through at least one sensor. The at least one sensor may be a proximity sensor. The at least one sensor may detect that a body of the user is within a predetermined range from the electronic device.

In operation 1005, the at least one processor 120 may generate a second vibration sound signal. This is because even though an intensity of sound input through a microphone is greater than or equal to a threshold, if the user is at a short distance, a need to increase transmissibility of the sound is low. While the electronic device 301 is in use, a probability that the user is in the short distance with the electronic device 301 is high. In addition, while the electronic device 301 is in use, a probability that the user is in contact with the electronic device 301 is high. Therefore, in case that the control signal for operating the motor 303 is identified while the electronic device 301 is in use, the processor 305 may generate the second vibration sound signal because the need to increase the transmissibility of the sound is low.

As described above, an electronic device 101 or 301 according to an embodiment may comprise at least one processor 120 or 305, a microphone 307, a speaker 309, and a motor 303. The electronic device 101 or 301 may comprise the at least one processor 120 or 305. The electronic device 101 or 301 may comprise the microphone 307. The electronic device 101 or 301 may comprise the speaker 309. The electronic device 101 or 301 may comprise the motor 303. The at least one processor 120 or 305 may be configured to identify a control signal for operating the motor 303. The at least one processor 120 or 305 may be configured to, based on identifying the control signal, identify an intensity of sound input through the microphone 307. The at least one processor 120 or 305 may be configured to, in a case that the intensity of the sound input through the microphone 307 is greater than or equal to a threshold, generate a first vibration sound signal based on a first frequency signal in accordance with a first sound pressure and a second frequency signal in accordance with a second sound pressure. The at least one processor 120 or 305 may be configured to, in a case that the intensity of the sound is lower than the threshold, generate a second vibration sound signal based on a first frequency signal in accordance with a third sound pressure and a second frequency signal in accordance with a fourth sound pressure. The first sound pressure may be smaller than the second sound pressure. The third sound pressure may be larger than the fourth sound pressure. A first frequency of the first frequency signal may be lower than a second frequency of the second frequency signal.

The first vibration sound signal according to an embodiment may be generated by synthesizing the first frequency signal and the second frequency signal. The second vibration sound signal may be generated by synthesizing the second frequency signal and the second frequency signal. The second frequency of the second frequency signal may be a multiple of the first frequency of the first frequency signal.

The electronic device 101 or 301 according to an embodiment may further comprise a high-pass filter 603. The at least one processor 120 or 305 may be, in order to generate the vibration sound signal, configured to, in the case that the intensity of the sound input through the microphone 307 is greater than or equal to a threshold, set a pass frequency of the high-pass filter 603 to a first pass frequency. The at least one processor 120 or 305 may generate the first vibration sound signal based on an audio signal passed through the high-pass filter 603. The at least one processor 120 or 305 may be configured to, in the case that the intensity of the sound input through the microphone 307 is lower than the threshold, set the pass frequency of the high-pass filter 603 to a second pass frequency. The at least one processor 120 or 305 may be configured to generate the second vibration sound signal based on an audio signal passed through the high-pass filter 603. The first pass frequency may be higher than the second pass frequency.

The at least one processor 120 or 305 according to an embodiment may be further configured to identify a control signal for generating the first vibration sound signal or the second vibration sound signal. The intensity of the sound input through the microphone 307 may be identified based on identifying the control signal for generating the first vibration sound signal or the second vibration sound signal.

An average frequency of the first vibration sound signal may be higher than an average frequency of the second vibration sound signal.

The at least one processor 120 or 305 according to an embodiment may be further configured to identify that the electronic device 101 or 301 is running a telephone application. The at least one processor 120 or 305 may be, in order to generate the first vibration sound signal or the second vibration sound signal, configured to, based on identifying the control signal for operating the motor 303 received while the telephone application is running, generate the first vibration sound signal or the second vibration sound signal with a first intensity. The at least one processor 120 or 305 may be configured to, based on identifying the control signal for operating the motor 303 received while the telephone application is not running, generate the first vibration sound signal or the second vibration sound signal with a second intensity. The first intensity may be smaller than the second intensity.

The electronic device 101 or 301 according to an embodiment may further comprise at least one sensor. The at least one processor 120 or 305 may be further configured to identify, through the at least one sensor, that the electronic device 101 or 301 is in use. The at least one processor 120 or 305 may be further configured to, based on identifying the control signal for operating the motor 303 received while the electronic device 101 or 301 is in use, generate the second vibration sound signal through the speaker.

The electronic device 101 or 301 according to an embodiment may further comprise at least one sensor. The at least one processor 120 or 305 may be further configured to identify, through the at least one sensor, that the electronic device 101or 301 is in use. The at least one processor 120 or 305) may be, in order to generate the first vibration sound signal or the second vibration sound signal, configured to, based on identifying the control signal for operating the motor 303 received while the electronic device 101 or 301 is in use, generate the first vibration sound signal and the second vibration sound signal with a third intensity. The at least one processor 120 or 305 may be configured to, based on identifying the control signal for operating the motor 303 received while the electronic device 101 or 301 is not in use, generate the first vibration sound signal and the second vibration sound signal with a second intensity. The third intensity may be smaller than the second intensity.

The at least one processor 120 or 305 according to an embodiment may be further configured to identify that the second vibration sound signal is generated through the speaker for a designated time. The at least one processor 120 or 305 may be further configured to, based on identifying that the second vibration sound signal is generated through the speaker for the designated time, generate the first vibration sound signal through the speaker.

The at least one processor 120 or 305 according to an embodiment may be further configured to identify that the first vibration sound signal or the second vibration sound signal is generated through the speaker with a fourth intensity for a designated time. The at least one processor 120 or 305 may be further configured to, based on identifying that the first vibration sound signal or the second vibration sound signal is generated through the speaker for the designated time, generate the first vibration sound signal or the second vibration sound signal through the speaker with a fifth intensity. The fourth intensity may be smaller than the fifth intensity.

As described above, a method performed by an electronic device 101 or 301 may comprise identifying a control signal for operating a motor 303. The method may comprise, based on identifying the control signal, identifying an intensity of sound input through a microphone 307. The method may comprise, in a case that the intensity of the sound input through the microphone 307 is greater than or equal to a threshold, generating a first vibration sound signal based on a first frequency signal in accordance with a first sound pressure and a second frequency signal in accordance with a second sound pressure. The method may comprise, in a case that the intensity of the sound is lower than the threshold, generating a second vibration sound signal based on a first frequency signal in accordance with a third sound pressure and a second frequency signal in accordance with a fourth sound pressure. The first sound pressure may be smaller than the second sound pressure. The third sound pressure may be larger than the fourth sound pressure. A first frequency of the first frequency signal may be smaller than a second frequency of the second frequency signal.

The first vibration sound signal according to an embodiment may be generated by synthesizing the first frequency signal and the second frequency signal. The second vibration sound signal may be generated by synthesizing the second frequency signal and the second frequency signal. The second frequency of the second frequency signal may be a multiple of the first frequency of the first frequency signal.

The generating of the vibration sound signal according to an embodiment may comprise, in the case that the intensity of the sound input through the microphone 307 is greater than or equal to the threshold, setting a pass frequency of a high-pass filter 603 to a first pass frequency. The generating of the first vibration sound signal may comprise generating the first vibration sound signal based on an audio signal passed through the high-pass filter 603. The generating of the vibration sound signal may comprise, in the case that the intensity of the sound input through the microphone 307 is lower than the threshold, setting the pass frequency of the high-pass filter 603 to a second pass frequency. The generating of the vibration sound signal may comprise generating the second vibration sound signal based on an audio signal passed through the high-pass filter 603. The first pass frequency may be higher than the second pass frequency.

The method according to an embodiment may further comprise identifying a control signal for generating the first vibration sound signal or the second vibration sound signal. The intensity of the sound input through the microphone 307 may be identified based on identifying the control signal for generating the first vibration sound signal or the second vibration sound signal.

An average frequency of the first vibration sound signal according to an embodiment may be higher than an average frequency of the second vibration sound signal.

The method according to an embodiment may further comprise identifying that the electronic device 101 or 301 is running a telephone application. The generating the first vibration sound signal or the second vibration sound signal may comprise, based on identifying the control signal for operating the motor 303 received while the telephone application is running, generating the first vibration sound signal or the second vibration sound signal with a first intensity. The generating the first vibration sound signal or the second vibration sound signal may comprise, based on identifying the control signal for operating the motor 303 received while the telephone application is not running, generating the first vibration sound signal or the second vibration sound signal with a second intensity. The first intensity may be smaller than the second intensity.

The method according to an embodiment may further comprise identifying, through the at least one sensor, that the electronic device 101 or 301 is in use. The method may further comprise, based on identifying the control signal for operating the motor 303 received while the electronic device 101 or 301 is in use, generating the second vibration sound signal through the speaker.

The method according to an embodiment may further comprise identifying, through the at least one sensor, that the electronic device 101or 301 is in use. The generating the first vibration sound signal or the second vibration sound signal may comprise, based on identifying the control signal for operating the motor 303 received while the electronic device 101 or 301 is in use, generating the first vibration sound signal and the second vibration sound signal with a third intensity. The generating the first vibration sound signal or the second vibration sound signal may comprise, based on identifying the control signal for operating the motor 303 received while the electronic device 101 or 301 is not in use, generating the first vibration sound signal and the second vibration sound signal with a second intensity. The third intensity may be smaller than the second intensity.

The method according to an embodiment may further comprise identifying that the second vibration sound signal is generated through the speaker for a designated time. The method may further comprise, based on identifying that the second vibration sound signal is generated through the speaker for the designated time, generating the first vibration sound signal through the speaker.

The method according to an embodiment may further comprise identifying that the first vibration sound signal or the second vibration sound signal is generated through the speaker with a fourth intensity for a designated time. The method may further comprise, based on identifying that the first vibration sound signal or the second vibration sound signal is generated through the speaker for the designated time, generating the first vibration sound signal or the second vibration sound signal through the speaker with a fifth intensity. The fourth intensity may be smaller than the fifth intensity.

As described above, according to an embodiment, a non-transitory storage medium may be provided. The non-transitory storage medium may comprise memory for storing instructions. The instructions, when executed by at least one processor, may cause an electronic device 101 or 301 to identify a control signal for operating a motor 303, based on identifying the control signal, identify an intensity of sound input through a microphone 307, in a case that the intensity of the sound input through the microphone 307 is greater than or equal to a threshold, generate a first vibration sound signal based on a first frequency signal in accordance with a first sound pressure and a second frequency signal in accordance with a second sound pressure, in a case that the intensity of the sound is lower than the threshold, generate a second vibration sound signal based on a first frequency signal in accordance with a third sound pressure and a second frequency signal in accordance with a fourth sound pressure. The first sound pressure may be smaller than the second sound pressure. The third sound pressure may be larger than the fourth sound pressure. A first frequency of the first frequency signal may be smaller than a second frequency of the second frequency signal.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101; 301), comprising:
at least one processor (120; 305);
a microphone (307);
a speaker (309); and
a motor (303),
wherein the at least one processor (120; 305) is configured to:
identify a control signal for operating the motor (303);
based on identifying the control signal, identify an intensity of sound input through the microphone (307);
in a case that the intensity of the sound input through the microphone (307) is greater than or equal to a threshold, generate a first vibration sound signal based on a first frequency signal in accordance with a first sound pressure and a second frequency signal in accordance with a second sound pressure; and
in a case that the intensity of the sound is lower than the threshold, generate a second vibration sound signal based on a first frequency signal in accordance with a third sound pressure and a second frequency signal in accordance with a fourth sound pressure,
wherein the first sound pressure is smaller than the second sound pressure,
wherein the third sound pressure is larger than the fourth sound pressure, and
wherein a first frequency of the first frequency signal is lower than a second frequency of the second frequency signal.

2. The electronic device of claim 1,
wherein the first vibration sound signal is generated by synthesizing the first frequency signal and the second frequency signal,
wherein the second vibration sound signal is generated by synthesizing the second frequency signal and the second frequency signal, and
wherein the second frequency of the second frequency signal is a multiple of the first frequency of the first frequency signal.

3. The electronic device of claims 1 to 2, further comprising:
a high-pass filter (603),
wherein the at least one processor (120; 305) is, in order to generate the vibration sound signal, configured to:
in the case that the intensity of the sound input through the microphone (307) is greater than or equal to a threshold:
set a pass frequency of the high-pass filter (603) to a first pass frequency, and
generate the first vibration sound signal based on an audio signal passed through the high-pass filter (603); and
in the case that the intensity of the sound input through the microphone (307) is lower than the threshold:
set the pass frequency of the high-pass filter (603) to a second pass frequency, and
generate the second vibration sound signal based on an audio signal passed through the high-pass filter (603), and
wherein the first pass frequency is higher than the second pass frequency.

4. The electronic device of claims 1 to 3,
wherein the at least one processor (120; 305) is further configured to:
identify a control signal for generating the first vibration sound signal or the second vibration sound signal, and
wherein the intensity of the sound input through the microphone (307) is identified based on identifying the control signal for generating the first vibration sound signal or the second vibration sound signal.

5. The electronic device of claims 1 to 4,
wherein an average frequency of the first vibration sound signal is higher than an average frequency of the second vibration sound signal.

6. The electronic device of claims 1 to 5,
wherein the at least one processor (120; 305) is further configured to identify that the electronic device (101; 301) is running a telephone application,
wherein the at least one processor (120; 305) is, in order to generate the first vibration sound signal or the second vibration sound signal, configured to:
based on identifying the control signal for operating the motor (303) received while the telephone application is running, generate the first vibration sound signal or the second vibration sound signal with a first intensity; and
based on identifying the control signal for operating the motor (303) received while the telephone application is not running, generate the first vibration sound signal or the second vibration sound signal with a second intensity, and
wherein the first intensity is smaller than the second intensity.

7. The electronic device of claims 1 to 6, further comprising:
at least one sensor,
wherein the at least one processor (120; 305) is configured to:
identify, through the at least one sensor, that the electronic device (101; 301) is in use, and,
based on identifying the control signal for operating the motor (303) received while the electronic device (101; 301) is in use, generate the second vibration sound signal through the speaker.

8. The electronic device of claims 1 to 7, further comprising at least one sensor,
wherein the at least one processor (120; 305) is further configured to identify, through the at least one sensor, that the electronic device (101; 301) is in use,
wherein the at least one processor (120; 305) is, in order to generate the first vibration sound signal or the second vibration sound signal, configured to:
based on identifying the control signal for operating the motor (303) received while the electronic device (101; 301) is in use, generate the first vibration sound signal and the second vibration sound signal with a third intensity; and
based on identifying the control signal for operating the motor (303) received while the electronic device (101; 301) is not in use, generate the first vibration sound signal and the second vibration sound signal with a second intensity, and
wherein the third intensity is smaller than the second intensity.

9. The electronic device of claims 1 to 8,
wherein the at least one processor (120; 305) is further configured to:
identify that the second vibration sound signal is generated through the speaker for a designated time, and
based on identifying that the second vibration sound signal is generated through the speaker for the designated time, generate the first vibration sound signal through the speaker.

10. The electronic device of claims 1 to 9, wherein the at least one processor (120; 305) is further configured to:
identify that the first vibration sound signal or the second vibration sound signal is generated through the speaker with a fourth intensity for a designated time, and
based on identifying that the first vibration sound signal or the second vibration sound signal is generated through the speaker for the designated time, generate the first vibration sound signal or the second vibration sound signal through the speaker with a fifth intensity, and
wherein the fourth intensity is smaller than the fifth intensity.

11. A method performed by an electronic device (101; 301), comprising:
identifying a control signal for operating a motor (303);
based on identifying the control signal, identifying an intensity of sound input through a microphone (307);
in a case that the intensity of the sound input through the microphone (307) is greater than or equal to a threshold, generating a first vibration sound signal based on a first frequency signal in accordance with a first sound pressure and a second frequency signal in accordance with a second sound pressure;
in a case that the intensity of the sound is lower than the threshold, generating a second vibration sound signal based on a first frequency signal in accordance with a third sound pressure and a second frequency signal in accordance with a fourth sound pressure,
wherein the first sound pressure is smaller than the second sound pressure,
wherein the third sound pressure is larger than the fourth sound pressure, and
wherein a first frequency of the first frequency signal is smaller than a second frequency of the second frequency signal.

12. The method of claim 11, wherein:
wherein the first vibration sound signal is generated by synthesizing the first frequency signal and the second frequency signal,
wherein the second vibration sound signal is generated by synthesizing the second frequency signal and the second frequency signal, and
wherein the second frequency of the second frequency signal is a multiple of the first frequency of the first frequency signal.

13. The method of claims 11 to 12, wherein the generating of the vibration sound signal comprises:
in the case that the intensity of the sound input through the microphone (307) is greater than or equal to the threshold:
setting a pass frequency of a high-pass filter (603) to a first pass frequency, and
generating the first vibration sound signal based on an audio signal passed through the high-pass filter (603); and
in the case that the intensity of the sound input through the microphone (307) is lower than the threshold:
setting the pass frequency of the high-pass filter (603) to a second pass frequency, and
generating the second vibration sound signal based on an audio signal passed through the high-pass filter (603), and
wherein the first pass frequency is higher than the second pass frequency.

14. The method of claims 11 to 13, further comprising:
identifying a control signal for generating the first vibration sound signal or the second vibration sound signal, and
wherein the intensity of the sound input through the microphone (307) is identified based on identifying the control signal for generating the first vibration sound signal or the second vibration sound signal.

15. The method of claims 11 to 14, wherein an average frequency of the first vibration sound signal is higher than an average frequency of the second vibration sound signal.
